# EUROPÄISCHE PATENTSCHRIFT

(11) **EP 1 747 384 B1**
(45) Veröffentlichungstag und Bekanntmachung des Hinweises auf die Patenterteilung: **29.07.2009**
(21) Anmeldenummer: 04734234.0
(22) Anmeldetag: 21.05.2004
(51) Int. Cl.: F16C 35/077

(54) **LAGERANORDNUNG BESTEHEND AUS EINEM LAGER UND EINEM LAGERTRÄGER**
BEARING ARRANGEMENT CONSISTING OF A BEARING AND A BEARING SUPPORT
ENSEMBLE PALIER CONSTITUE D'UN PALIER ET D'UN SUPPORT DE PALIER

(43) Veröffentlichungstag der Anmeldung: 31.01.2007
(73) Patentinhaber: AB SKF, 415 50 Göteborg (SE)
(72) Erfinder: HORLING, Peter, 97453 Mainberg (DE); BRANDENSTEIN, Manfred, 97776 Eussenheim (DE); HERTERICH, Thomas, 97490 Poppenhausen (DE); SCHEMMEL, Bruno, 97505 Geldersheim (DE); HOCH, Paul-Gerhard, 97456 Dittelbrunn (DE); LIANG, Baozhu, 97456 Dittelbrunn-Hambach (DE)
(74) Vertreter: Kohl, Thomas
(86) Internationale Anmeldenummer: PCT/EP2004/005445
(87) Internationale Veröffentlichungsnummer: WO 2005/113996

(56) Entgegenhaltungen:
- EP-A- 0 562 160
- EP-A- 1 058 017
- DE-A- 10 100 465
- DE-C- 19 950 732
- GB-A- 1 028 191

## Beschreibung

Die Erfindung betrifft eine Lageranordnung bestehend aus einem Lager und aus einem Lagerträger zur Befestigung des Lagers an einem Maschinenteil.

Bei der Befestigung eines Lagers an einem Maschinenteil tritt mitunter das Problem auf, dass das Maschinenteil und das Lager radial zueinander beabstandet sind und somit eine direkte Fixierung des Lagers am Maschinenteil nicht möglich ist. Diesbezüglich ist es bereits bekannt, zwischen dem Lager und dem Maschinenteil einen Zwischenring einzufügen, dessen Wandstärke auf den radialen Abstand zwischen dem Lager und dem Maschinenteil abgestimmt ist.

Weiterhin ist aus der GB-PS 1 028 191 ein Montageteil für einen Lageraußenring bekannt, mit dem die Außenumfangsfläche des Lagers auf einen radialen Abstand zu einer Wandfläche einer Bohrung, in der das Lager montiert werden soll, gebracht werden kann. Das Montageteil weist eine Scheibe mit einer Vielzahl von nachgiebigen Fingern auf, die sich am Lageraußenring abstützen. Die Scheibe stützt sich ihrerseits in der Bohrung ab. In einer Variante stützen sich die Finger in der Bohrung und die Scheibe am Lageraußenring ab.

Die DE 101 00 465 A1 offenbart ein Kugellager-Halteteil zum Halten eines Kugellagers in einem Gehäuse. Das Halteteil ist ringförmig ausgebildet und weist elastisch nachgebende Lappen auf, die mit ihren Innenseiten jeweils am Kugellager anliegen und mit ihren Außenseiten an einer Bohrungsfläche und somit das Kugellager in einem radialen Abstand zur Bohrungsfläche fixieren.

Aus der DE 199 50 732 C1 ist es bekannt, ein Elastomermaterial in einen Aufnahmeraum zwischen einem Lager und einem Maschinenteil einzuschieben und eine Hülse zwischen dem Maschinenteil und dem Elastomermaterial einzupressen und dadurch einen Druck auf das Elastomermaterial zu erzeugen.

Die bekannten Maßnahmen eignen sich zwar jeweils zur Überbrückung der Distanz zwischen dem Lager und dem Maschinenteil, sind jedoch bis auf den massiven Zwischenring im Hinblick auf die erzielbare Positioniergenauigkeit des Lagers relativ zum Maschinenteil begrenzt und ermöglichen keine radiale Justierung des Lagers relativ zum Maschinenteil.

Der Erfindung liegt die Aufgabe zugrunde, eine mechanische Fixierung eines Lagers an einem radial dazu beabstandeten Maschinenteil so auszubilden, dass eine präzise Positionierung des Lagers, insbesondere auch in Radialrichtung, möglich ist.

Diese Aufgabe wird durch eine Lageranordnung mit der Merkmalskombination des Anspruchs 1 gelöst.

Die erfindungsgemäße Lageranordnung besteht aus einem Lager und einem Lagerträger zur Befestigung des Lagers an einem Maschinenteil. Der Lagerträger ist als ein Blechteil ausgebildet und weist einen ersten Befestigungsabschnitt zur Befestigung des Lagerträgers am Maschinenteil auf. Weiterhin weist der Lagerträger einen zweiten Befestigungsabschnitt auf, der das Lager in einem radialen Abstand hülsenförmig umschließt. Die erfindungsgemäße Lageranordnung zeichnet sich dadurch aus, dass der zweite Befestigungsabschnitt des Lagerträgers und ein Teilbereich des Lagers in einem starren Kunststoffkörper eingebettet sind und dadurch mechanisch miteinander verbunden sind, wobei die axiale Erstreckung des Kunststoffkörpers um ein vielfaches größer ist als der mittlere radiale Abstand zwischen dem zweiten Befestigungsabschnitt des Lagerträgers und dem Lager.

Die Erfindung hat den Vorteil, dass das Lager während der Montage sowohl axial als auch radial relativ zum Lagerträger justiert und in einer gewünschten Position fixiert werden kann. Angesichts der relativ geringen radialen Ausdehnung des Kunststoffkörpers lässt sich eine vergleichsweise hohe Präzision und mechanische Stabilität bei der Befestigung des Lagers am Lagerträger erreichen. Ein weiterer Vorteil, der insbesondere beim Einsatz der erfindungsgemäßen Lageranordnung bei Elektromaschinen von größter Bedeutung ist, besteht darin, dass das Lager vom Maschinenteil elektrisch isoliert ist. Dadurch können etwaige Lagerschäden, die durch einen unzulässigen Stromdurchgang hervorgerufen werden, wirksam verhindert werden.

In einem bevorzugten Ausführungsbeispiel ist die axiale Erstreckung des Kunststoffkörpers wenigstens sechs mal so groß wie der mittlere radiale Abstand zwischen dem zweiten Befestigungsabschnitt des Lagerträgers und dem Lager. Durch diese Geometrie kann die Präzision und die mechanische Stabilität der Fixierung des Lagers am Lagerträger auch sehr hoch gesteckten Anforderungen gerecht werden. Weiterhin ist es vorteilhaft, dass der Kunststoffkörper beiderseits axial über das Lager übersteht und radial mit dem Lager überlappt. Auf diese Weise wird eine formschlüssige Verbindung zwischen dem Lager und dem Kunststoffkörper hergestellt und das Lager dadurch in Axialrichtung wirksam gesichert.

Der Kunststoffkörper kann stoffschlüssig mit dem Lager und/oder dem zweiten Befestigungsabschnitt des Lagerträgers verbunden sein, so dass die Fixierung des Lagers am Lagerträger hohen Belastungen standhält. Insbesondere kann der Kunststoffkörper im Spritzgussverfahren hergestellt sein. Die Herstellung des Kunststoffkörpers ist dadurch kostengünstig möglich und es steht eine große Palette von potentiellen Werkstoffen für die Herstellung des Kunststoffkörpers zur Verfügung. Vorzugsweise wird der Kunststoffkörper aus einem Kunststoffmaterial hergestellt, dass einen Füllstoff enthält. Dies hat den Vorteil, dass sich der Kunststoffkörper mit einer hohen Festigkeit und Maßhaltigkeit ausbilden lässt. Als Füllstoff eignen sich insbesondere Glasfasern.

Der zweite Befestigungsabschnitt des Lagerträgers kann bereichsweise als radial einwärts gerichteter Flansch ausgebildet sein. Dadurch ergibt sich zum einen eine in Radialrichtung formschlüssige Verbindung zwischen dem Kunststoffkörper und dem Lagerträger und zum anderen wird einem Fliesen des Kunststoffs in Axialrichtung entgegengewirkt und somit die mechanische Stabilität des Kunststoffkörpers erhöht. Besonders wirkungsvoll ist der Flansch dann, wenn er radial mit dem Lager überlappt.

Der erste Befestigungsabschnitt des Lagerträgers weist in einem bevorzugten Ausführungsbeispiel eine zylinderförmige Sitzfläche auf. Dies hat den Vorteil, dass der Lagerträger auf sehr einfache Weise zuverlässig am Maschinenteil fixiert werden kann, beispielsweise durch Einpressen mit einer Überdeckung in eine zylindrische Bohrung des Maschinenteils.

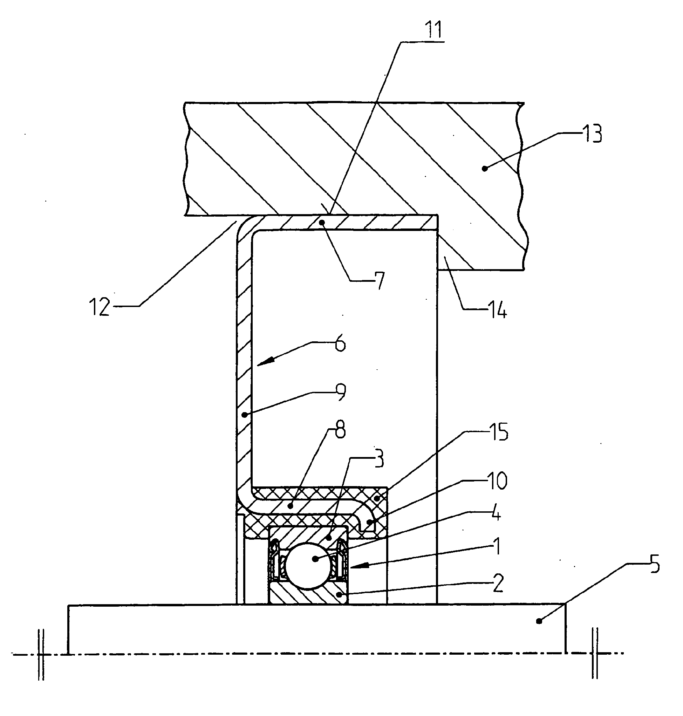

Die Erfindung wird nachstehend anhand des in der Zeichnung dargestellten Ausführungsbeispiels erläutert.

Die einzige Figur zeigt ein Ausführungsbeispiel für die erfindungsgemäße Lageranordnung in Schnittdarstellung. Die Lageranordnung weist ein Kugellager 1 auf, das aus einem Innenring 2, einem Außenring 3 und zwischen dem Innenring 2 und dem Außenring 3 abrollenden Kugeln 4 besteht. Durch das Kugellager 1 wird eine Welle 5 drehbar gelagert, die in den Innenring 2 eingepresst ist. Die Lageranordnung weist weiterhin einen Lagerträger 6 mit einem U-förmigen Querschnitt auf. Der Lagerträger 6 weist einen äußeren Rohrabschnitt 7 und einen inneren Rohrabschnitt 8 auf, die über einen Radialabschnitt 9 miteinander verbunden sind. Der innere Rohrabschnitt 8 ist bereichsweise radial nach innen umgebogen, so dass ein radial einwärts gerichteter Flansch 10 ausgebildet wird, der radial mit dem Außenring 3 überlappt. Der äußere Rohrabschnitt 7, der innere Rohrabschnitt 8 mit dem Flansch 10 und der Radialabschnitt 9 sind einteilig als ein gemeinsames Blechteil ausgebildet. Die äußere Mantelfläche des äußeren Rohrabschnitts 7 ist als eine Sitzfläche 11 ausgebildet und mit einer Überdeckung in eine Bohrung 12 eines Gehäuses 13 bis zu einer Schulter 14 eingepresst.

Von wesentlicher Bedeutung für die Erfindung ist ein Kunststoffkörper 15 in dem der innere Rohrabschnitt 8 inklusive des Flansches 10 vollständig eingebettet ist. Weiterhin ist der Außenring 3 im Bereich seiner äußeren Mantelfläche und jeweils im radial äußeren Bereich seiner axialen Endflächen in dem Kunststoffkörper 15 eingebettet. Der Kunststoffkörper füllt insbesondere den radialen Ringraum zwischen der äußeren Mantelfläche des Außenrings 3 und der inneren Mantelfläche des inneren Rohrabschnitts 8 aus und ist in seiner axialen Erstreckung um ein vielfaches größer als die mittlere radiale Erstreckung des genannten Ringraums. Insbesondere ist die axiale Erstreckung des Kunststoffkörpers 15 mehr als sechs mal so groß wie die mittlere radiale Erstreckung des Ringraums. Der Kunststoffkörper 15 ist formstabil und starr ausgebildet und wird im Spritzgussverfahren hergestellt, wobei die äußere Gestalt durch eine in der Figur nicht dargestellte Spritzgussform vorgegeben wird. Die äußere Gestalt des Kunststoffkörpers 15 zeichnet sich insbesondere dadurch aus, dass der Kunststoffkörper 15 axial über den Außenring 3 übersteht und in dem überstehenden Bereich radial mit dem Außenring 3 überlappt. Dadurch wird eine in Axialrichtung formschlüssige Verbindung zwischen dem Kunststoffkörper 15 und dem Außenring 3 ausgebildet. Als Spritzgussmaterial wird vorzugsweise ein Kunststoff verwendet, dem ein Füllstoff zugesetzt ist. Als Füllstoff eignen sich beispielsweise Glasfasern. Das Spritzgussmaterial verbindet sich stoffschlüssig mit dem Außenring 3 und dem Lagerträger 6. Über den Flansch 10 ist der Kunststoffkörper 15 auch mit dem Lagerträger 6 in Axialrichtung formschlüssig verbunden.

Durch die spritzgusstechnische Herstellung des Kunststoffkörpers 15 während der Montage des Kugellagers 1 im Lagerträger 6 besteht die Möglichkeit, das Kugellager 1 sowohl in Axialrichtung als auch in Radialrichtung relativ zum Lagerträger 6 zu justieren und in einer gewünschten Position zu fixieren. Dies hat zur Folge, dass die radiale Ausdehnung des Ringraums zwischen dem Außenring 3 und dem inneren Rohrabschnitt 8 über den Umfang variieren kann. Dabei wird allerdings sicher gestellt, dass sich der Außenring 3 und der innere Rohrabschnitt 8 an keiner Stelle berühren. Da der Kunststoffkörper 15 elektrisch isoliert, bedeutet dies, dass die Welle 5 gegenüber dem Gehäuse 13 elektrisch isoliert ist und folglich durch das Kugellager 1 kein Stromfluss zustande kommen kann. Dies ist insofern von Bedeutung, da ein Stromfluss durch das Lager gravierende Lagerschäden zur Folge haben kann. Die erfindungsgemäße Befestigung des Rillenkugellagers 1 am Lagerträger 6 ermöglicht somit zusätzlich zu einer Justierbarkeit und einer hohen Präzision eine elektrisch isolierte Ausbildung der Befestigung des Lagers am Gehäuse 13.

Obwohl der in der Figur dargestellte Anwendungsfall in der Praxis sicherlich überwiegen wird, ist es prinzipiell auch möglich, auf die erfindungsgemäße Art und Weise das Rillenkugellager 1 mittels eines entsprechend modifizierten Lagerträgers 6 an einer Welle zu fixieren, die einen geringeren Durchmesser als der Innendurchmesser des Innenrings 2 aufweist. In diesem Fall könnte der Außenring 3 direkt in die Bohrung 12 des Gehäuses 13 eingepresst werden. Der Lagerträger 6 wäre durch den Kunststoffkörper 15 mit dem Innenring 2 verbunden und würde auf die Welle 5 aufgepresst werden.

## Patentansprüche

1. Lageranordnung bestehend aus einem Lager (1) und aus einem Lagerträger (6) zur Befestigung des Lagers (1) an einem Maschinenteil (13), wobei der Lagerträger (6) als ein Blechteil ausgebildet ist und einen ersten Befestigungsabschnitt (7) zur Befestigung des Lagerträgers (6) am Maschinenteil (13) aufweist sowie einen zweiten Befestigungsabschnitt (8), der das Lager (1) in einem radialen Abstand hülsenförmig umschließt, **dadurch gekennzeichnet, dass** der zweite Befestigungsabschnitt (8) des Lagerträgers (6) und ein Teilbereich des Lagers (1) in einem starren Kunststoffkörper (15) eingebettet sind und dadurch mechanisch miteinander verbunden sind, wobei die axiale Erstreckung des Kunststoffkörpers (15) um ein Vielfaches größer ist als der mittlere radiale Abstand zwischen dem zweiten Befestigungsabschnitt (8) des Lagerträgers (6) und dem Lager (1).

2. Lageranordnung nach Anspruch 1, **dadurch gekennzeichnet, dass** die axiale Erstreckung des Kunststoffkörpers (15) wenigstens sechs mal so groß ist wie der mittlere radiale Abstand zwischen dem zweiten Befestigungsabschnitt (8) des Lagerträgers (6) und dem Lager (1).

3. Lageranordnung nach einem der vorhergehenden Ansprüche, **dadurch gekennzeichnet, dass** der Kunststoffkörper (15) beiderseits axial über das Lager (1) übersteht und radial mit dem Lager (1) überlappt.

4. Lageranordnung nach einem der vorhergehenden Ansprüche, **dadurch gekennzeichnet, dass** der Kunststoffkörper (15) stoffschlüssig mit dem Lager (1) und/oder dem zweiten Befestigungsabschnitt (8) des Lagerträgers (6) verbunden ist.

5. Lageranordnung nach einem der vorhergehenden Ansprüche, **dadurch gekennzeichnet, dass** der Kunststoffkörper (15) im Spritzgussverfahren hergestellt ist.

6. Lageranordnung nach einem der vorhergehenden Ansprüche, **dadurch gekennzeichnet, dass** der Kunststoffkörper (15) aus einem Kunststoffmaterial hergestellt ist, das einen Füllstoff enthält.

7. Lageranordnung nach Anspruch 6, **dadurch gekennzeichnet, dass** der Füllstoff aus Glasfasern besteht.

8. Lageranordnung nach einem der vorhergehenden Ansprüche, **dadurch gekennzeichnet, dass** der zweite Befestigungsabschnitt (8) des Lagerträgers (6) bereichsweise als radial einwärts gerichteter Flansch (10) ausgebildet ist.

9. Lageranordnung nach Anspruch 8, **dadurch gekennzeichnet, dass** der Flansch (10) radial mit dem Lager (1) überlappt.

10. Lageranordnung nach einem der vorhergehenden Ansprüche, **dadurch gekennzeichnet, dass** der erste Befestigungsabschnitt (7) des Lagerträgers eine zylinderförmige Sitzfläche (11) aufweist.

## Claims

1. Bearing arrangement consisting of a bearing (1) and of a bearing carrier (6) for fastening the bearing (1) to a machine part (13), the bearing carrier (6) being produced as a sheet-metal part and having a first fastening portion (7) for fastening the bearing carrier (6) to the machine part (13) and also a second fastening portion (8) which surrounds the bearing (1) with a radial clearance in a sleeve-shaped manner, **characterized in that** the second fastening portion (8) of the bearing carrier (6) and a part-region of the bearing (1) are embedded in a rigid plastic body (15) and are thereby connected mechanically to one another, the axial extent of the plastic body (15) being greater by a multiple than the mean radial clearance between the second fastening portion (8) of the bearing carrier (6) and the bearing (1).

2. Bearing arrangement according to Claim 1,
**characterized in that** the axial extent of the plastic body (15) is at least six times as great as the mean radial clearance between the second fastening portion (8) of the bearing carrier (6) and the bearing (1).

3. Bearing arrangement according to one of the preceding claims, **characterized in that** the plastic body (15) projects axially beyond the bearing (1) on both sides and overlaps radially with the bearing (1).

4. Bearing arrangement according to one of the preceding claims, **characterized in that** the plastic body (15) is connected in a materially integral manner to the bearing (1) and/or to the second fastening portion (8) of the bearing carrier (6).

5. Bearing arrangement according to one of the preceding claims, **characterized in that** the plastic body (15) is produced by the injection moulding method.

6. Bearing arrangement according to one of the preceding claims, **characterized in that** the plastic body (15) is produced from a plastic material which contains a filler.

7. Bearing arrangement according to Claim 6, **characterized in that** the filler consists of gas fibres.

8. Bearing arrangement according to one of the preceding claims, **characterized in that** the second fastening portion (8) of the bearing carrier (6) is designed, in regions, as a flange (10) directed radially inwards.

9. Bearing arrangement according to Claim 8, **characterized in that** the flange (10) overlaps radially with the bearing (1).

10. Bearing arrangement according to one of the preceding claims, **characterized in that** the first fastening portion (7) of the bearing carrier has a cylindrical seat surface (11).

## Revendications

1. Agencement de palier constitué d'un palier (1) et d'un support de palier (6) pour la fixation du palier (1) sur une partie de machine (13), le support de palier (6) étant réalisé sous forme de pièce en tôle et présentant une première portion de fixation (7) pour la fixation du support de palier (6) sur la partie de machine (13), ainsi qu'une deuxième portion de fixation (8) qui entoure le palier (1) à la manière d'une douille à distance radiale, **caractérisé en ce que** la deuxième portion de fixation (8) du support de palier (6) et une région partielle du palier (1) sont encastrées dans un corps en plastique rigide (15) et sont de ce fait connectées mécaniquement l'une à l'autre, l'étendue axiale du corps en plastique (15) étant plusieurs fois plus grande que la distance radiale moyenne entre la deuxième portion de fixation (8) du support de palier (6) et le palier (1).

2. Agencement de palier selon la revendication 1, **caractérisé en ce que** l'étendue axiale du corps en plastique (15) est au moins six fois plus grande que la distance radiale moyenne entre la deuxième portion de fixation (8) du support de palier (6) et le palier (1).

3. Agencement de palier selon l'une quelconque des revendications précédentes, **caractérisé en ce que** le corps en plastique (15) dépasse axialement des deux côtés au-delà du palier (1) et recouvre radialement le palier (1).

4. Agencement de palier selon l'une quelconque des revendications précédentes, **caractérisé en ce que** le corps en plastique (15) est connecté par engagement par liaison de matière avec le palier (1) et/ou avec la deuxième portion de fixation (8) du support de palier (6).

5. Agencement de palier selon l'une quelconque des revendications précédentes, **caractérisé en ce que** le corps en plastique (15) est fabriqué par un procédé de moulage par injection.

6. Agencement de palier selon l'une quelconque des revendications précédentes, **caractérisé en ce que** le corps en plastique (15) est fabriqué en un matériau en plastique qui contient une charge.

7. Agencement de palier selon la revendication 6, **caractérisé en ce que** la charge est constituée de fibres de verre.

8. Agencement de palier selon l'une quelconque des revendications précédentes, **caractérisé en ce que** la deuxième portion de fixation (8) du support de palier (6) est réalisée en partie sous forme de bride (10) orientée radialement vers l'intérieur.

9. Agencement de palier selon la revendication 8, **caractérisé en ce que** la bride (10) recouvre radialement le palier (1).

10. Agencement de palier selon l'une quelconque des revendications précédentes, **caractérisé en ce que** la première portion de fixation (7) du support de palier présente une surface de siège (11) de forme cylindrique.
